(19) Europäisches Patentamt
European Patent Office
Office européen des brevets

(11) EP 4 337 816 B1

(12) # EUROPEAN PATENT SPECIFICATION

(45) Date of publication and mention of the grant of the patent:
**03.12.2025 Bulletin 2025/49**

(21) Application number: **22728461.9**

(22) Date of filing: **09.05.2022**

(51) International Patent Classification (IPC):
***D01F 6/60*** *(2006.01)* ***B33Y 70/00*** *(2020.01)*
***B29C 64/118*** *(2017.01)*

(52) Cooperative Patent Classification (CPC):
**D01F 6/60; B29C 64/118; B33Y 70/00**

(86) International application number:
**PCT/EP2022/062516**

(87) International publication number:
**WO 2022/238344 (17.11.2022 Gazette 2022/46)**

(54) **FILAMENT CONTAINING POLYAMIDE (PA) POLYMER AND ITS USE FOR ADDITIVE MANUFACTURING**

FILAMENT AUS POLYAMID (PA) UND DESSEN VERWENDUNG ZUR GENERATIVEN FERTIGUNG

FILAMENT CONTENANT UN POLYMÈRE POLYAMIDE (PA) ET SON UTILISATION POUR LA FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2021 EP 21305610**

(43) Date of publication of application:
**20.03.2024 Bulletin 2024/12**

(73) Proprietor: **Syensqo Specialty Polymers USA, LLC**
**Alpharetta GA 30005-3914 (US)**

(72) Inventors:
- **JEOL, Stéphane**
  **69230 Saint-Genis-Laval (FR)**
- **BERTRAND, Arthur, René, Henri**
  **69360 Communay (FR)**
- **BOSSENNEC, Véronique**
  **69360 SEREZIN-DU-RHÔNE (FR)**

(74) Representative: **Senninger, Thierry**
**Specialty Operations France**
**Intellectual Assets Management**
**52, rue de la Haie Coq**
**93308 Aubervilliers Cedex (FR)**

(56) References cited:
**WO-A1-2019/170463**
**GB-A- 1 150 860**
**US-A- 3 393 210**
**US-A- 3 591 565**
**US-A- 3 691 749**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 337 816 B1

## Description

The present application claims the priority of European patent application EP 21305610.4 filed on 11 May 2021.

## Technical Field

The present invention relates to a filament for manufacturing a three-dimensional (3D) article. The filament comprises a polyamide (PA) presenting 4,4'-diaminodicyclohexylmethane moieties, as well as to a process for manufacturing a three-dimensional (3D) article, part or composite material, from such filaments. The present invention also relates to the 3D article, part or composite material obtainable from such process, as well as the use of the article, part or composite materials in oil and gas applications, automotive applications, electric and electronic applications, aerospace, medical and consumer goods.

## Background Art

Many objects, from household items to motor parts, are produced either from a single mass of material or they are milled or carved from a larger block of material. An alternative approach to manufacture objects is to deposit a layer of material, and then add another layer on top, followed by another and another, and so on. This process of adding gave rise to the name additive manufacturing (AM), more commonly known as 3D printing. The range of specially designed 3D-printed products on the market is now considerable - from motor parts to dental implants. They can be notably manufactured using plastics. It is expected that additive manufacturing will disrupt established practices and overturn conventional assumptions about mass production in distant factories. Local fabrication in small volumes, or even of single items, close to the end user will become viable.

In an extrusion-based AM system, a 3D part is printed from a digital representation of the 3D part in a layer-by-layer manner by extruding and adjoining strips of a part material. The part material is extruded through an extrusion tip carried by a print head of the system, and is deposited as a sequence of roads on a platen in an x-y plane. The extruded part material fuses to previously deposited part material, and solidifies upon a drop in temperature. The position of the print head relative to the substrate is then incremented along a z-axis (perpendicular to the x-y plane), and the process is then repeated to form a 3D part resembling the digital representation. An example of extrusion-based AM system starting from filaments is called Fused Filament Fabrication (FFF), also known as Fused Deposition Modelling (FDM).

One of the fundamental limitations associated with known extrusion-based AM methods using polymeric part material in the form of filaments is based on the lack of identification of polymeric material presenting the right set of properties, in order to print articles, parts or composite materials with acceptable properties, notably thermal and mechanical properties.

Certain polyamides are used for manufacturing articles by extrusion-based 3D printing. Mention can for example be made of polyamide 12 (PA12) and polyamide 6 (PA6). These polyamides advantageously have a melting temperature (Tm) lower than 280°C, and therefore have a much broader temperature window for their synthesis and processing in the melt, which first offers more flexibility in synthesis and processing, but also leads to printed parts with less colouring due to degradation. These polyamides however have a low glass transition temperatures (Tg), e.g. below 50°C, which make them unsuitable to prepare articles used in applications requiring a high temperature resistance as their mechanical properties, such as modulus or strength, fall significantly above this temperature. For example, PA12 has a Tg of 40°C and PA6 has a Tg of 50°C. In particular for PA 6, it absorbs so much moisture when exposed to ambient environment that its Tg decreases dramatically and parts made with PA 6 have lower modulus when exposed at temperatures above room temperature. In addition, these polyamides require a drying step before being used.

There is therefore a need for polyamide polymers having a higher Tg than the polyamide commercially available, so that they can be used in 3D printing to manufacture articles requiring high temperature resistance (e.g. modulus and strength at temperature that are traditionally encountered in applications like automotive interior and exterior, up to 100°C), and that do not drastically change with the humidity present in the environment. There is also a need for polyamide resin that absorb less moisture than commercially available polyamides. Such polyamide resins should also advantageously keep their low melting temperature (Tm), in order to remain compatible with most standard printers. These polyamide resins should also advantageously present thermal properties compatible with support materials, which may be used during the printing process to support the article under construction.

The polyamide of the invention is based on the condensation of a specific cycloaliphatic diamine, 4,4'-diaminodicyclohexylmethane (PACM), and at least one long chain aliphatic dicarboxylic acid. The applicant has indeed identified that polyamides derived from this combination of monomers present a high Tg, and, at the same time, keep a low Tm, which makes them well-suited to be 3D printed and used in applications requiring high temperature resistance. As described in Prince et al., Macromolecules 4(3): 347-350, 1971, such cycloaliphatic diamines exist in three different geometric configurations, *i.e.* trans/trans, cis/cis and cis/trans. In fact, the applicant has not only realised that such

monomers are key to prepare polyamides with the above presented advantageous thermal properties (high Tg, low Tm), but also that only certain molar ratios of trans/trans isomers can actually lead to said improved thermal properties.

US 5,360,891 (Huels) relates to a colorless and transparent, amorphous processable polyamide comprising the reaction product of I. a linear aliphatic dicarboxylic acid; II. a) 35-60 mol % of trans, trans-bis(4-aminocyclohexyl)-methane; and II. b) 65-40 mol % of other aliphatic, cycloaliphatic, araliphatic or aromatic diamines as starting components.

US 2015/0099847 (Evonik) relates to a composition, comprising a blend of two polyamides wherein one of them is a polyamide having as copolymerized units bis(4-aminocyclohexyl)methane (PACM) and a linear dicarboxylic acid having from 8 to 18 C atoms.

US 8,399,557 (Arkema) relates to a transparent blend or alloy comprising from 1 to 99 wt.% of a copolymer comprising two types of units: (A1) amide units, including at least one cycloaliphatic unit and (A2) flexible ether units, wherein the cycloaliphatic diamine or diamines can be chosen from bis(3-methyl-4-aminocyclohexyl) methane (BMACM), para-aminodicyclohexylmethane (PACM), isophoronediamine (IPD), bis(4-aminocyclohexyl) methane (BACM), 2,2-bis(3-methyl-4-aminocyclohexyl) propane (BMACP) or 2,6-bis(aminomethyl)norbornane (BAMN).

WO 2019/170463 discloses a filament comprising a core material coated with a layer of shell material.

GB 1150860 discloses fibres made of a polyamide.

US 3,591,565 discloses a void-free monofilament of a composition consisting essentially of poly(hexamethylene adipamide) and from 1.0 to 10% by weight of the composition of a member of the class consisting of lithium chloride, lithium bromide and lithium iodide.

US 3,691,749 discloses a multifilament feed yarn for false-twist texturing composed of PACM.12 polyamide derived from bis-4- aminocyclohexyl)methane (at least 45 percent trans/trans isomer) and dodecanedioic acid.

US 3,393,210 (Dupont, 1968) describe a fiber-forming polycarbonamide (including copolycarbonamide) presenting the following repeat unit:

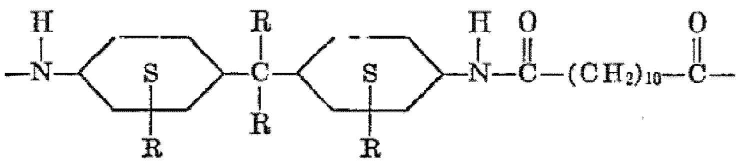

(I)

None of these patent documents describe the use of such polyamide for manufacturing a 3D object using extrusion-based 3D printing.

Brief disclosure of the invention

The present invention relates to a filament as defined in any one of claims 1 to 14. The filament is based on and comprises a polymeric component (P) which comprises a polyamide (PA).

The present invention relates to a method as defined in claim 15 and the use as defined in claim 16.

More details and precisions on all these subject-matters are given below.

**Disclosure of the invention**

In the present application:

- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

The expression *"polymer"* or *"copolymer"* is hereby used to designate homopolymers containing substantially 100 mol. % of the same repeat units and copolymers comprising at least 10 mol. % of the same repeat units, for example at least about 20 mol. %, at least about 30 mol. %, at least about 40 mol. %, at least about 50 mol. %, at least about 60 mol. %, at least about 65 mol. %, at least about 70 mol. %, at least about 75 mol. %, at least about 80 mol. %, at least about 85 mol. %, at least about 90 mol. %, at least about 95 mol. % or at least about 98 mol. %.

The expression *"part material"* hereby refers to a blend of material, notably polymeric compounds, intended to form a 3D object or a part of the 3D object. The part material (M) is according to the present invention in the form of a filament which is used as feedstock for the manufacture of 3D objects or part of 3D objects.
The expression *"filament"* refers to a thread-like object or fiber or strand formed of a material or blend of materials which, according to the present invention, comprises at least the PA polymer described herein.

## About the filament of the invention

Disclosed herein is a filament, notably as disclosed in claim 1, comprising at least 50 wt. % (based on the total weight of the filament) of a polyamide (PA) polymer comprising repeat units ($R_{PA}$) according to formula (I):

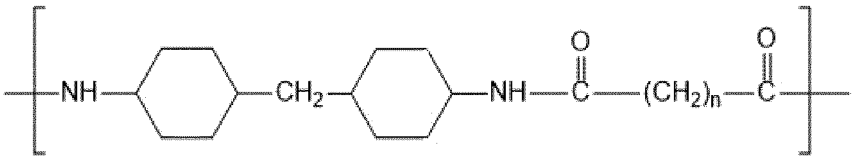

(I)

wherein:

- n varies between 12 and 20, and
- at least 30 mol.% of the 4,4'-diaminodicyclohexylmethane moiety is in a trans/trans configuration, based on the total number of moles of the 4,4'-diaminodicyclohexylmethane moiety in the PA, preferably at least 40 mol.%, more preferably at least 50 mol.%.

The filament comprises at least 50 wt.% of a polymeric component (P) (i.e. at least the PA described herein), and they may additionally comprise additional components, for example additives (A), such as fillers.
The proportion of polyamide(s) (PA) in the filament may be at least 50.0 wt%, more particularly at least 70.0 wt%, more particularly at least 80.0 wt%, this proportion being based on the total weight of the filament.
The filament of the present invention has a cylindrical or a substantially cylindrical geometry with a diameter between 0.5 and 5.0 mm. The filament may also have a cylindrical or substantially cylindrical geometry with a diameter comprised between 0.5 and 5 mm $\pm$ 0.15 mm. The diameter may be between 0.8 and 4.0 mm or between 1.0 mm and 3.5 mm.
The accuracy of the diameter is generally +/- 200 microns, for example +/- 100 microns or +/- 50 microns.
d can be chosen to feed a specific FFF 3D printer. An example of diameter used extensively in FFF process has a diameter d of 1.75 mm or 2.85 mm.
Preferably, the filament is a full filament. The term *"full"* is used in comparison to a hollow geometry and denotes a filament which is not hollow.
According to a preferred embodiment, the filament does not present a core/shell geometry with another polymeric composition. The *"core/shell geometry"* refers to a filament having an elongated core radially surrounded by an outer shell. The core and the shell are generally made of two different polymer compositions or of two polymers of the same composition but with distinct physico-chemical properties.
Preferentially, the filament has a round cross-section.
According to an embodiment of the invention, the method for manufacturing a 3D object with an AM system comprises a step consisting in extruding the filament. This step may, for example, occur when printing or depositing strips or layers of filament. The method for manufacturing 3D objects with an extrusion-based AM system is also known as Fused Filament Fabrication technique (FFF) or Fused Deposition Modeling (FDM). The method of the present invention may also be a method involving continuous fibres (e.g. continuous carbon fibre bundles) impregnated with the filament described herein.
The filament comprises at least one polymeric component (P), i.e. at least one PA. The polymeric component (P) of the filament may in fact comprise one or several PA as described herein. The filament may also comprise at least one additional polymeric material, that-is-to-say at least one polymer or copolymer, distinct from the PA polymer described herein. This additional polymeric material may for example be selected from the group consisting of poly(arylene sulphide) (PAS) polymers, for example homopolymer of poly(phenylene sulphide) (PPS) polymer, poly(aryl ether sulfone) (PAES) polymers, for example a poly(biphenyl ether sulfone) (PPSU) polymer or a polysulfone (PSU) polymer, and poly(aryl ether ketone) (PAEK) polymers, for example a poly(ether ether ketone) (PEEK) polymer. This additional polymeric material may also be a polyamide (PA*) distinct from the PA described herein, for example a PA6, a PA66, a PA11 or a PA12.

The filament may comprise at least 50.0 wt.%, or at least 55 wt.% of the polymeric component (P), this proportion being based on the total weight of the filament. This proportion may be at least 58 wt.%, or at least 60 wt.%, or at least 65 wt.%, or at least 70 wt.%, or at least 75 wt.%, or at least 80 wt.%, or at least 85 wt.%, or at least 90 wt.%, or at least 95 wt.%, or at least 98 wt.% or at least 99 wt.%.

The polymeric component (P) may comprise at least 70 wt.% of the PA or the PAs described herein, this proportion being based on the total weight of the polymeric component (P) in the filament. This proportion may be at least 75 wt.%, or at least 78 wt. %, or at least 80 wt.%, or at least 90 wt.%, or at least 95 wt.%, or at least 98 wt.% or at least 99 wt.%.

The filament advantageously comprises the polyamide(s) (PA) described herein as the only polymeric component (P).

In other words, the filament advantageously comprises or consists essentially in from 50 wt. % to 100 wt.% (for example from 70 wt.% to 100 wt.%, or from 80 wt.% to 100 wt.%) of the PA(s) described herein, and optionally additional components which are not of the polymeric nature, for example a filler.

The filament comprises at least one polyamide (PA). According to an embodiment, the filament may comprise more than one polyamide (PA). In this case, the polyamides (PA) are blended together. According to another embodiment, the filament comprises only one polyamide (PA).

Preferably, the filament (and the polymeric component (P)) does not comprise a polyamide other than the polyamide(s) (PA). In other words, the filament (and the polymeric component (P)) does not comprise a polyamide (PA*) distinct from the PA described herein, for example a PA6, a PA66, a PA11 or a PA12.

**About the polyamide (PA)**

The polyamide (PA) described herein comprises repeat units ($R_{PA}$) according to formula (I):

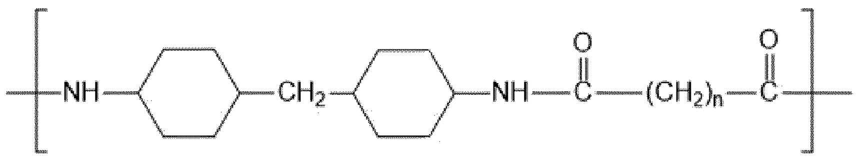

(I)

wherein:

- n varies between 12 and 20;
- at least 30 mol.% of the 4,4'-diaminodicyclohexylmethane moiety is in a trans/trans configuration, based on the total number of moles of the 4,4'-diaminodicyclohexylmethane moiety in the PA.

The expression "*n varies between 12 and 20"* means that n may take any value in the range and is equal to 12 or 20; in other words, in the present disclosure, the endpoints of the ranges are included in the claimed scope.

n may be between 13 and 19 or between 14 and 16.

n may take the value of any integer in the claimed range. n may for instance be an integer as disclosed in one of the examples. n may more particularly be 14.

In some embodiments, the PA described herein comprises at least 10 mol. % of the ($R_{PA}$) repeat units, for example at least about 20 mol. %, at least about 30 mol. %, at least about 40 mol. %, at least about 50 mol. %, at least about 60 mol. %, at least about 65 mol. %, at least about 70 mol. %, at least about 75 mol. %, at least about 80 mol. %, at least about 85 mol. %, at least about 90 mol. %, at least about 95 mol. % or at least about 98 mol. % of the ($R_{PA}$) repeat units, based on the total number of repeat units in the polyamide (PA).

In the polyamide (PA), at least 30.0 mol.% of the 4,4'-diaminodicyclohexylmethane moiety (present in the repeat units ($R_{PA}$)) are in a trans/trans configuration, based on the total number of moles of the 4,4'-diaminodicyclohexylmethane moiety in the PA.

This proportion is preferably at least 40.0 mol.%, more preferably at least 50.0 mol.%. This proportion may be lower than 70.0 mol.%, preferably lower than 60.0 mol.%, even more preferably lower than 55.0 wt%.

The proportion of 4,4'-diaminodicyclohexylmethane moiety in a trans/trans configuration may be between 30.0 mol.% and 50.0 mol.% (this latter value being excluded).

The proportion of 4,4'-diaminodicyclohexylmethane moiety in a trans/trans configuration makes it possible to have a polymer which is well-suited for additive manufacturing (3D printing). Indeed, the polyamide is hydrophobic (see the water uptake below) and has interesting thermal properties (a high glass transition temperature and a low melting point

which) which ensures a good processing when printing. The polyamide is advantageously different from most of the commercially available polyamides, such as PA12 (Tg<50°C) and PA6 (Tg<60°C, hydrophilic). The PA also advantageously presents a suitable water uptake, as defined below, which contributes to maintain a high glass transition temperature.

The 4,4'-diaminodicyclohexylmethane moiety stems from the use of the PACM monomer of formula (II):

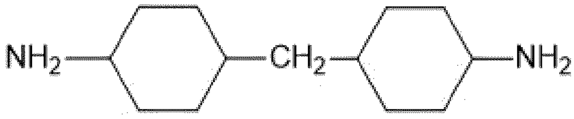

(II).

The proportion of 4,4'-diaminodicyclohexylmethane moiety in a trans/trans configuration is obtained by the proportion of monomer (II) having the trans/trans configuration in the condensation mixture. In some embodiments, the PACM monomer of formula (II) is such that at least 40 mol.% of the monomer engaged in the polycondensation reaction is in a trans/trans configuration, based on the total number of moles of PACM engaged in the reaction, for example at least 42 mol.%, at least 44 mol.%, at least 46 mol.%, at least 48 mol.%, or at least 50 mol.%. In some embodiments, the PACM monomer of formula (II) is such that at most 70 mol.% of the monomer engaged in the polycondensation reaction is in a trans/trans configuration, based on the total number of moles of PACM engaged in the reaction, for example at most 65 mol.%, at most 62 mol.%, at most 60 mol.%, at most 58 mol.%, or at most 56 mol.%. In some embodiments, all the PACM monomer of formula (II) engaged in the polycondensation reaction is in a trans/trans configuration. In some other embodiments, all the PACM monomer of formula (II) engaged in the polycondensation reaction is in a trans/trans configuration, and the PACM of formula (II) is the only diamine used to prepare the polyamide (PA).

## Homopolyamide

According to an embodiment, the polyamide (PA) is a homopolyamide. The repeat units of the polyamide (PA) consist of or consist essentially of the repeat units ($R_{PA}$). Such polyamide may be prepared by polycondensation in the presence of a condensation mixture which comprises 4,4'-diaminodicyclohexylmethane (PACM) of formula (II):

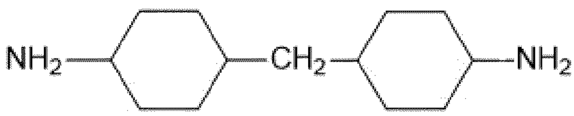

(II),

wherein at least 30.0 mol.% of the PACM are in a trans/trans configuration, based on the total number of moles of PACM in the reaction mixture, and a diacid of formula (III):

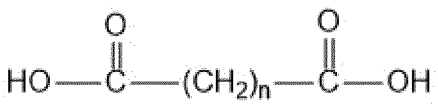

(III),

n being as disclosed above, and optionally water.

The diacid of formula (III) may, for example, be chosen from the group consisting of tetradecanedioic acid [$HOOC-(CH_2)_{12}-COOH$], pentadecanedioic acid [$HOOC-(CH_2)_{13}-COOH$], hexadecanedioic acid [$HOOC-(CH_2)_{14}-COOH$], heptadecanedioic acid [$HOOC-(CH_2)_{15}-COOH$], octadecanedioic acid [$HOOC-(CH_2)_{16}-COOH$] and nonadecandioic acid [$HOOC-(CH_2)_{17}-COOH$]. The diacid of formula (III) is preferably chosen from the group consisting of tetradecanedioic acid, pentadecanedioic acid, hexadecanedioic acid, heptadecanedioic acid and octadecanedioic acid.

The polyamide (PA) may for example comprise at least 10 mol. % of repeat units ($R_{PA}$), for example derived from PACM as described above, and at least one dicarboxylic acid $HOOC-(CH_2)_{n-}COOH$, wherein n varies between 12 and 20, inclusive, for example at least about 15 mol. %, at least about 20 mol. %, at least about 25 mol. %, at least about 30 mol. %, at least about 35 mol. %, at least about 40 mol. %, at least about 45 mol. %, at least about 50 mol. %, at least about 55 mol. %, at least about 60 mol. %, at least about 65 mol. %, at least about 70 mol. %, at least about 75 mol. %, at least about 80 mol. %, at least about 85 mol. %, at least about 90 mol. %, at least about 95 mol. % or at least about 98 mol. %.

According to an embodiment, the polyamide (PA) consists essentially in repeat units ($R_{PA}$). For this embodiment,

the expression *"consist essentially"* means that the polyamide comprises less than 2 mol.% of repeat units distinct from repeat units ($R_{PA}$), for example less than 1 mol. %, less than 0.5 mol.% or even less than 0.1 mol.% of repeat units distinct from repeat units ($R_{PA}$).

The condensation mixture also preferably comprises a catalyst, for instance a catalyst containing at least an atom of phosphorus such as a phosphite. Typically, catalyst is sodium hypophosphite.

The proportion of water in the condensation mixture is generally less than 40 wt.%, preferably less than 30 wt.%, more preferably less than 20 wt.%, more preferably less than 10 wt.%. Preferably, the condensation mixture contains no added water.

The condensation mixture must be heated at a high temperature, preferably up to a temperature of at least Tm+10°C, Tm being the melting temperature of the polyamide. This temperature may be at least 250°C or even at least 270°C.

The polycondensation is advantageously performed in the melt, notably in the absence of a solvent.

The polycondensation is advantageously performed in a well stirred vessel such as a stirred reactor, an extruder or a kneader. The polycondensation is preferably performed in a stirred reactor. The vessel is also advantageously equipped with means to remove the volatile products of the reaction. As the viscosity of the reaction mixture increases over time, the stirrer is adapted to provide sufficient stirring to the reaction mixture at the beginning of the polymerization and when the conversion of the polycondensation is nearly complete.

The conditions used in the experimental section may be followed and if needs be, adapted for the preparation of homopolyamides.

## Copolyamide

According to another embodiment, the polyamide (PA) comprises the repeat units ($R_{PA}$) as disclosed above and also the repeat units ($R^*_{PA}$) according to formula (IV) and/or formula (V):

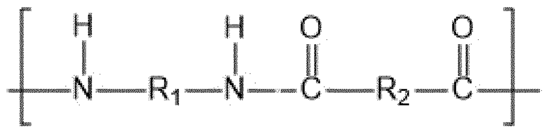

(IV)

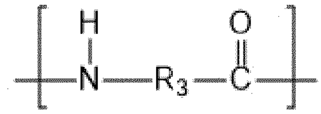

(V)

wherein:

$R_1$ is selected from the group consisting of a $C_1$-$C_{15}$ alkyl and a $C_6$-$C_{30}$ aryl, optionally comprising one or more heteroatoms (e.g. O, N or S) and optionally substituted with one or more substituents selected from the group consisting of halogen (e.g. fluorine, chlorine, bromine or iodine), hydroxy (-OH), sulfo (-$SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl;

$R_2$ is selected from the group consisting of a $C_1$-$C_{20}$ alkyl and a $C_6$-$C_{30}$ aryl, optionally comprising one or more heteroatoms (e.g. O, N or S) and optionally substituted with one or more substituents selected from the group consisting of halogen (e.g. fluorine, chlorine, bromine or iodine), hydroxy (-OH), sulfo (-$SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl; and

$R_3$ is selected from the group consisting of a linear or branched $C_1$-$C_{14}$ alkyl, optionally comprising one or more heteroatoms (e.g. O, N and S) and optionally substituted with one or more substituents selected from the group consisting of halogen (e.g. fluorine, chlorine, bromine and iodine), hydroxy (-OH), sulfo (-$SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl.

More particularly, $R_1$ is selected from the group consisting of a $C_1$-$C_{15}$ alkyl and a $C_6$-$C_{30}$ aryl; $R_2$ is selected from the group consisting of a $C_1$-$C_{20}$ alkyl and a $C_6$-$C_{30}$ aryl; and $R_3$ is a linear or branched $C_1$-$C_{14}$ alkyl.

The polyamide (PA) may be a copolyamide comprising the repeat units ($R_{PA}$) and also the repeat units ($R^*_{PA}$) derived from at least one aminocarboxylic acid and/or at least one lactam.

According to an embodiment, the repeat units of the copolyamide consist essentially of or consist of the repeat

units ($R_{PA}$) and ($R^*_{PA}$).

The proportion of the repeat units ($R^*_{PA}$) in the copolyamide may be between 1.0 mol% and 25.0 mol%, this proportion being based on the total number of repeat units in the polyamide (PA). This proportion is preferably between 5.0 mol% and 20.0 mol%.

According to an embodiment, the PA comprises repeat units ($R_{PA}$), as well as less than 10 mol.%, preferably less than 5 mol.%, more preferably less than 3 mol.%, even more preferably less than 1 mol.%, of other repeat units distinct ($R^*_{PA}$) from repeat units ($R_{PA}$), based on the total number of moles of repeat units ($R_{PA}$) + ($R^*_{PA}$) in the PA polymer.

The copolyamide is also prepared by polycondensation. In such case, the condensation mixture disclosed above further comprises at least one component selected from the group consisting of :

- at least one dicarboxylic acid and at least one diamine, and/or
- at least one aminocarboxylic acid, and/or
- at least one lactam.

The dicarboxylic acid component can be chosen among a large variety of aliphatic or aromatic components comprising at least two acidic moieties -COOH. The diamine can also be chosen among a large variety of aliphatic or aromatic components comprising at least two amine moieties $-NH_2$.

The dicarboxylic acid may be selected from the group consisting of adipic acid, sebacic acid, dodecanedioic acid, isophthalic acid, terephthalic acid, 2,6-naphthalene dicarboxylic acid, 4,4'-bibenzoic acid, 5-hydroxyisophthalic acid, 5-sulfophthalic acid, 1,4-cyclohexanedicarboxylic acid and mixture thereof.

The diamine may be selected from the group consisting of 1,4-diaminobutane, 1,5-diaminopentane, 2-methyl-1,5-diaminopentane, hexamethylene diamine, 1,9-diaminononane, 2-methyl-1,8-diaminooctoane, 1,10-diaminedecane, 1,12-dodecanediamine, m-xylylene diamine, p-xylylene diamine, $H_2N-(CH_2)_3-O-(CH_2)_2-O(CH_2)_3-NH_2$, bis(4-amino-3-methylcyclohexyl)methane (MACM), isophorone diamine (IPDA), 1,3-bis(aminomethyl)cyclohexane and mixture thereof.

The lactam may be selected from the group consisting of caprolactam, laurolactam and mixture thereof.

The aminocarboxylic acid may have from 3 to 15 carbon atoms, for example from 4 to 13 carbon atoms. The aminocarboxylic acid may be selected from the group of 1,11-aminoundecanoic acid, 4-aminomethylcyclohexanoic acid and mixture thereof.

All conditions of preparation disclosed above for the preparation of the homopolyamides (presence of water, catalyst, temperature, type of vessel, etc) remains valid for the copolyamide.

**Properties of the polyamide (PA)**

The polyamide (PA) is advantageously semi-crystalline.

The polyamide (PA) preferably exhibits a heat of fusion of at least 5.0 J/g or of at least 10.0 J/g. The heat of fusion is determined on the 2nd heat scan in differential scanning calorimeter (DSC) according to ISO11357, using a heating rate of 20°C/min.

The polyamide (PA) may exhibit a melting point (Tm) higher than 180°C. Tm may be preferably at least 190°C, more preferably at least 200°C or at least 220°C.

Tm may be at most 240°C, preferably at most 230°C.

Tm may be between 180°C and 240°C, preferably between 180°C and 230°C. Tm may be between 190°C and 230°C.

Tm is determined on the 2nd heat scan in differential scanning calorimeter (DSC) according to ISO11357, using a heating and a cooling rate of 20°C/min. The conditions provided in the experimental section may be followed to determine Tm.

Preferably, the PA has a glass transition temperature (Tg) of at least 90°C, preferably of at least 100°C, more preferably of at least 110°C, when determined on the 2nd heat scan in differential scanning calorimeter (DSC) according to ISO11357, using heating and cooling rates of 20°C/min. Tg is preferably at least 120°C.

The PA may have a glass transition temperature (Tg) of at most 170°C, preferably at most 160°C.

The polyamide (PA) may also exhibit a glass temperature (Tg) higher than 90°C. Tg may preferably be at least 130°C. Tg may be between 120°C and 160°C, preferably between 100°C, even preferably at least 110°C.

Tg may be at most 170°C, preferably at most 160°C.

The glass temperature is determined on the 2nd heat scan in differential scanning calorimeter (DSC) according to ISO11357, using heating and cooling rates of 20°C/min. The conditions provided in the experimental section may be followed to determine Tg.

The polyamide (PA) may have a number average molecular weight $M_n$ ranging from 5,000 g/mol to 40,000 g/mol, for example from 7,000 g/mol to 35,000 g/mol or from 9,000 to 30,000 g/mol. . The concentration of the end-groups may

more precisely be determined by known methods to measure amine end-groups concentration and acid end groups-concentrations. The end-groups are moieties at the ends of the PA polymer chains that are used to assess the number average molecular weight (Mn) of the PA polymer. Depending on the possible use of an end-capping agent during the process, the PA may possess, for example, end-groups derived from the monomers and/or from end-capping agents. As the PA is prepared by a polycondensation reaction between a diamine and a diacid, the end groups generally include amine groups and acid groups; however, when an end-capping agent (such as benzoic acid or acetic acid) is used, the remaining amine groups may be at least partially converted into benzamide or acetamide end groups.

The concentration of amine and acid end-groups can be determined by potentiometric titration. Nevertheless, any suitable method may be used to determine the concentration of the end groups. For example, NMR, most notably $^1H$ NMR, may also conveniently be used, especially to quantify the concentration in the end-capping agent.

The polyamide (PA) has preferably a water uptake at saturation, by immersion in water at 23°C, of less than 4.0 wt.%, preferably less 3.5 wt.%, preferably less than 3.0 wt.%, preferably less than 2.5 wt.%. This property is important for performance stability of a 3D object prepared by 3D printing after exposure of the object to humidity.

The water uptake at 23°C can be advantageously determined by (i) providing a specimen shaped according to ISO527 in its dry state (moisture content of less than 0.2 wt.%), (ii) immersing the same in deionized water at 23°C, until reaching a constant weight, (iii) calculating the water uptake with the formula:

$$\text{Water uptake} = \frac{W_{after} - W_{before}}{W_{before}} \times 100$$

wherein $W_{before}$ is the weight of the shaped specimen in its original dry state and $W_{after}$ is the weight of the shaped specimen after water uptake.

The filament of the present invention comprises one polymeric component (P) comprising at least one PA polymer as described above. The filament of the present invention may consist essentially in one or several polymers; for example, it may consist essentially in one PA polymer as described herein, or it may also comprise further components, for example one or several additives (A), such as fillers. When the filament of the invention comprises additional components, they can be added or blended with the polymeric component described herein. The filament can also be a continuous fiber bundle (carbon, glass) impregnated with the PA polymer as described herein.

## Additive(s)

The filament may also further comprise one or several additives (A), generally blended with or incorporated into the polyamide (PA), for example selected from the group consisting of:

- fillers (such as continuous or chopped carbon fibers, continuous or chopped glass fibers, milled carbon fibers, milled glass fibers, glass beads, glass microspheres, wollastonite, silica beads, talc, calcium carbonates);
- colorants, dyes, pigments;
- lubricants;
- plasticizers;
- flame retardants (such as halogen and halogen-free flame retardants);
- nucleating agents;
- heat stabilizers;
- light stabilizers;
- antioxidants;
- processing aids;
- fusing agents; and
- electromagnetic absorbers.

The filament may also further comprise one or several additives (A), blended with the polyamide (PA) and selected from the group consisting of:

- fillers;
- colorants, dyes, pigments;
- flame retardants; and
- antioxidants.

According to an embodiment, the filament comprises at least one filler blended with or incorporated into the

polyamide (PA). The filler may be more particularly selected in the group consisting of continuous or chopped carbon fibers, continuous or chopped glass fibers, milled carbon fibers, milled glass fibers, glass beads, glass microspheres, wollastonite, silica beads, talc, calcium carbonates, biobased fibers, polymeric fibers and combination thereof. The polymeric fibers are for instance aramid fibers, rock wool fibers, natural fibers (e.g. linen, hemp, cellulose, or nanocellulose), and any combination of two or more thereof. The filler is more particularly a carbon fiber, notably selected in the group consisting of continuous carbon fibers, chopped carbon fibers and milled carbon fibers.

The filament may further comprise carbon fibers as an additive (A). The carbon fibers may be continuous or chopped carbon fibers. The proportion of carbon fibers may be between 5.0 and 30.0 wt%, more particularly between 10.0 and 25.0 wt%, the % being based on the total weight of the filament.

The flame retardant that may be used as an additive (A) may be an halogen-based flame retardant or a halogen-free flame retardant, such as a phosphorous-based flame retardant. The phosphorous-based flame retardant may be selected in the group consisting of metal alkyl phosphinates. An example of metal alkyl phosphinate is aluminum diethyl phosphinate, for instance the one known under the trade name Exolit® from Clariant. Another example of phosphorous-based flame retardant which makes it possible to have 3D objects of good quality while ensuring a good level of flame retardancy is disclosed below:

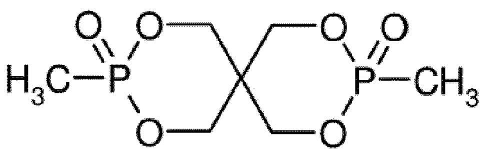

The heat stabilizer that may be used as an additive (A) may be more particularly selected in the group consisting of mono- or divalent coppers, stabilizers based on secondary aromatic amines, stabilizers based on sterically hindered phenols, phosphites, phosphonites, metal salts, metal oxides and combination thereof.

Specific examples of these optional additives (A) are titanium dioxide, zinc oxide, cerium oxide, silica or zinc sulphide, glass fibers and carbon fibers.

The filament or the part material may comprise from 0.01 wt. % to less than 50.0 wt. % of at least one additive (A), with respect to the total weight of the filament. For example, the amount of additive(s) in the filament may range from 0.1 wt.% to 30.0 wt.%, from 0.5 wt.% to 20.0 wt.%, from 1.0 wt.% to 15.0 wt.% or from 2.0 wt.% to 10.0 wt.%, with respect to the total weight of the filament.

According to one specific embodiment, the filament comprises, consists in or consists essentially in:

- from at least 50 wt.% to 100 wt. % of the polymeric component (P), preferably from at least 70 wt.% to 100 wt.% of the PA described herein,
- optionally at least one additive (A), for example in an amount varying from 0.01 wt.% to less than 50 wt.%, selected from the group consisting of fillers (such as continuous or chopped carbon fibers, continuous or chopped glass fibers, milled carbon fibers, milled glass fibers, glass beads, glass microspheres, wollastonite, silica beads, talc, calcium carbonates) colorants, dyes, pigments, lubricants, plasticizers, flame retardants (such as halogen and halogen free flame retardants), nucleating agents, heat stabilizers, light stabilizers, antioxidants, processing aids, fusing agents and electromagnetic absorbers,

the % being based on the total weight of the filament.

The proportion of the additive(s) (A) may be between 0 and 30.0 wt%, more particularly between 5.0 and 25.0 wt%.

**Method of preparation of the filament of the invention**

The filament can be prepared from a two-step process in which a compound is first produced to make part material in pellet form, and then the pellets are extruded to produce the filament. Alternatively, the filament of the present invention can be prepared from an integrated process in which the compounds and the filaments are prepared in a one-step process.

The filament can be made from the part material by methods including, but not limited to, melt-mixing processes. Melt-mixing processes are typically carried out by heating the polymer component(s) above the highest melting temperature and glass transition temperature of the thermoplastic polymers thereby forming a melt of the thermoplastic polymers. In some embodiments, the processing temperature ranges from about 240-450°C, preferably from about 250-440°C, from about 260-430°C.

The process of preparation of the filament can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the filament, the components of the part material are fed to the melt-mixing apparatus and meltmixed in that apparatus. The components may be fed simultaneously as a powder mixture or granule mixer, also known as dry-blend, or may be fed separately.

The order of combining the components during melt-mixing is not particularly limited. In one embodiment, the components can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

The method for manufacturing the filaments also comprises a step of extrusion, for example with a die. For this purpose, any standard extrusion technique can be used. Dies may be used to shape the articles, for example a die having a circular orifice if the article is a filament of cylindrical geometry.

In some embodiments, the filament is obtained by a melt-mixing process carried out by heating the polymer component above its melting temperature and melt-mixing the components of the part material.

The method may comprise if needed several successive steps of melt-mixing or extrusion under different conditions.

The process itself, or each step of the process if relevant, may also comprise a step consisting in a cooling of the molten mixture.

The preparation of a filament may be performed in the conditions provided in the experimental section.

**AM method for manufacturing a 3D article, part or composite material**

The filaments ("*filament materials*") disclosed herein can be used in AM 3D printing. The invention thus also relates to a process for manufacturing a 3D object (i.e. article, part or composite material) from these filaments. The 3D object can be manufactured using an additive manufacturing (AM) system, such as an extrusion-based additive manufacturing system (for example FFF or FDM).

The 3D objects or articles obtainable by such method of manufacture can be used in a variety of final applications. Mention can be made in particular of implantable devices, medical devices, dental prostheses, brackets and complex shaped parts in the aerospace industry and under-the-hood parts in the automotive industry which require a high resistance temperature.

The present invention relates to an AM method for manufacturing a three-dimensional (3D) article, part or composite material, comprising extruding the filament described above.

The AM method of the present invention is preferably a Fused Filament Fabrication (FFF) method, also known as Fused Deposition Modelling (FDM). The AM method of the present invention may also preferably be a method for continuous carbon fiber filler filaments.

FFF/FDM 3D printers are, for example, commercially available from Apium, from Roboze, from Hyrel or from Stratasys, Inc. (under the trade name Fortus®).

In some embodiments, the method further comprises at least one of the following steps, in connection with the 3D printer:

- feeding the filament to a discharge head member having a throughbore ending with a discharge tip and a circumferential heater to melt the filament in the throughbore;
- heating the filament to a temperature of at least 250°C, prior to extrusion;
- compressing the filament with a piston, for example with the unmelted filament acting as a piston, in the throughbore;
- ensuring relative movement in X- and Y- directions of the discharge tip and of a receiving platform while discharging the filament on the receiving platform to form the cross sectional shape; and/or
- ensuring relative movement in the Z-direction of the discharge tip and the receiving platform while discharging the filament on the receiving platform to form the 3D object or part in elevation.

The 3D object/article/part/composite may be built on substrate, for example a horizontal substrate and/or on a planar substrate. The substrate may be moveable in all directions, for example in the horizontal or vertical direction. During the 3D printing process, the substrate can, for example, be lowered, in order for the successive layer of polymeric material to be deposited on top of the former layer of polymeric material.

In some embodiments, the AM method for making a 3D object/article/part/composite further comprises a step consisting in producing a support structure, using a support material. According to such embodiments, the 3D object is built

upon the support structure and both the support structure and the 3D object are produced using the same AM method. The support structure may be useful in multiple situations. For example, the support structure may be useful in providing sufficient support to the printed or under-printing, in order to avoid distortion of the shaped 3D object, especially when this 3D object is not planar. This is particularly true when the temperature used to maintain the printed or under-printing, 3D object is below the re-solidification temperature of the polymeric component, e.g. the polyamide.

A variety of conventional polymeric components can be used as a breakaway or soluble support material. Any support material used in conjunction with PA6 or PA12 filaments can be used in conjunction with the filament of the invention. A non-exhaustive list of soluble support material are Poly Vinyl Alcohol and polyglycolic acid. The support material may also possess a water absorption behaviour or a solubility in water at a temperature lower than 110°C, in order sufficiently swell or deform upon exposure to moisture.

According to an embodiment of the present invention, the AM method for making a three-dimensional (3D) object, further comprises the steps of :

- printing layers of a support structure from the support material, for example extruding a filament of support material, before the step of extrusion of the filament of part material, and
- after 3D printing, removing at least a portion of the support structure from the 3D object.

Additionally, the 3D printer may comprise a chamber in order to maintain the filament at a determined specific temperature.

While not strictly necessary, the 3D object/article/part/composite may also be subjected to heat-treatment after manufacture (also called annealing or tempering). In this case, the 3D object/article/part may be placed in an oven set up at a temperature ranging from 80 to 180°C, preferably from 100 to 160°C, for a period of time ranging from about 30 minutes to 24 hours, preferably from 1 hour to 8 hours.

3D article, part or composite material & Applications

The present invention also relates to a 3D article, part or composite material comprising the PA as described herein, obtainable from the AM process of the present invention, and to the use of said article, part or composite material in oil and gas applications, automotive applications, electric and electronic applications, aerospace, medical and consumer goods.

With respect to automotive applications, said articles can be pans (e.g. oil pans), panels (e.g. exterior body panels, including but not limited to quarter panels, trunk, hood; and interior body panels, including but not limited to, door panels and dash panels), side-panels, mirrors, bumpers, bars (e.g., torsion bars and sway bars), rods, suspensions components (e.g., suspension rods, leaf springs, suspension arms), and turbo charger components (e.g. housings, volutes, compressor wheels and impellers), pipes (to convey for example fuel, coolant, air, brake fluid). With respect to oil and gas applications, said articles can be drilling components, such as downhole drilling tubes, metal protection liners and coatings, chemical injection tubes, undersea umbilicals and hydraulic control lines. Said articles can also be mobile electronic device components.

According to an embodiment, the composite material obtainable from the additive manufacturing process of the present invention is a continuous fibers reinforced thermoplastics composite. The fibers may be composed of carbon, glass or organic fibers such as aramid fibers.

The present invention also relates to the use of the filament described herein, for the manufacture of a 3D object using additive manufacturing, preferably FFF or FDM.

The present invention additionally relates to the use of a PA described as above-described for the manufacture of a filament for use in the manufacture of three-dimensional objects.

## Experimental section

### Raw materials

**PACM:** 4,4'-methylene-bis-cyclohexylamine, 45-50 mol.% of trans/trans isomer, commercially available from BASF under the name Dicykan®

**PACM*:** 4,4'-methylene-bis-cyclohexylamine, 17-24 mol.% of trans/trans isomer, commercially available from Evonik under the name Vestamin® PACM

**C14 diacid:** tetradecanedioic acid, commercially available from Cathay Biotech Inc

**C15 diacid:** pentadecanedioic acid commercially available from Cathay Biotech Inc.

**C16 diacid:** hexadecanedioic acid, commercially available from Cathay Biotech Inc.
**C18 diacid:** octadecanedioic acid, commercially available from Elevance
**PA12:** commercially available from Evonik
**PA6:** commercially available from Domo Chemicals

**Preparation examples**

Four polyamides were synthesized from melt polycondensation of PACM and either C14, C15, C16 or C18 acids.

Preparation of PACM.16

95.5 g (0,45 mol) of PACM, 128.4 g (0,44 mol) of C16 diacid, and 4.16 g of an aqueous solution of sodium hypophosphite monohydrate (5%wt, 2mmol) were introduced in a stainless-steel reactor equipped with a mechanical stirrer. The reactor was purged with nitrogen, and the temperature in the reactor was gradually increased up to 275°C. The reaction proceeded at atmospheric pressure. Condensation water as well as water from the catalyst solution were distilled off. The reaction mixture was kept at 275°C for 30 min. The resulting polymer was then discharged as a strand and pelletized.

Preparation of PACM.14, PACM.15, PACM.18

The procedure used for PACM.16 was applied for the preparation of these polyamides with the appropriate diacid.

Synthesis of PACM*.16 (comparative):

The same procedure than for PACM.16 was applied for the preparation of this polyamide, except that a PACM with trans/trans isomer concentration of 17-24 mol.% was used (designated as PACM*).

**Characterization of the polymeric component**

Determination of the Mn by the end-group analysis

The end groups, amine end groups ($-NH_2$) and carboxylic acid end groups (-COOH), of the polyamides are determined by potentiometric titration and expressed in mmol/kg. The number average molecular weight Mn is then determined by the equation (1) and expressed in g/mol. The concentration of end-groups and respective calculated number average molecular weight (Mn) are respectively listed in Table 1 and 2 below.

Table 1

| Polymer | $-NH_2$ (mmol/g) | -COOH (mmol/g) | $\Sigma[EG_i]$ (mmol/g) |
|---|---|---|---|
| PACM.14 (inv) | 95 | 40 | 105 |
| PACM.15 (inv) | 105 | 38 | 143 |
| PACM.16 (inv) | 63 | 60 | 123 |
| PACM.18 (inv) | 55 | 36 | 91 |

DSC

DSC analyses were carried out on DSC 8000 (Perkin Elmer) according to ISO11357 and data were collected through a two heat, one cool method. The protocol used is the following: 1$^{st}$ heat cycle from 30.00°C to 300.00°C at 20.00°C/min; isothermal for 5 minutes; 1$^{st}$ cool cycle from 300.00°C to 30.00°C at 20.00°C/min; 2$^{nd}$ heat cycle from 30.00°C to 300.00°C at 20.00°C/min. The melting temperature ($T_m$) is recorded during the 1$^{st}$ and 2$^{nd}$ heat cycles, the melt crystallization temperature ($T_c$) is recorded during the cool cycle, and the glass transition temperature ($T_g$) is recorded during the 2$^{nd}$ heat cycle.

Water uptake

The polyamides specimen were shaped according to ISO527 in its dry state (moisture content of less than 0.2 wt.%), and then immersed in deionized water at 23°C, until reaching a constant weight. The water uptake is calculated according to the formula:

$$\text{Water uptake} = \frac{W_{after} - W_{before}}{W_{before}} \times 100$$

wherein $W_{before}$ is the weight of the shaped specimen in its original dry state and $W_{after}$ is the weight of the shaped specimen after water uptake.

**Results**

Table 2

| Ex. | $M_n$ (kg/mol) | Tc (°C) | Tm (°C) | Tg (°C) | Water uptake |
|---|---|---|---|---|---|
| PACM.14 (inv) | 14.9 | 171 | 233 | 131 | < 4% |
| PACM.15 (inv) | 14.1 | 170 | 227 | 123 | < 4% |
| PACM.16 (inv) | 16.2 | 167 | 229 | 125 | < 4% |
| PACM.18 (inv) | 22.0 | 164 | 225 | 116 | < 4% |
| PACM*.16 (comp) | - | None | None | 120 | - |
| PACM.6 (comp) | - | ND | 355 | 165 | - |
| PA12 (comp) | - | ND | 180 | 40 | 2% |
| PA6 (comp) | - | ND | 220 | 50 | 9% |
| ND: not determined | | | | | |

As shown in Table 2, the PACM*.16 polymer has no melting point nor crystallisation point. It is amorphous which is not desired for filament production for 3D printing as it does not have any mechanical integrity at temperatures beyond 120°C.

All the polyamides of the invention advantageously present a water uptake of less than 4 %.

Filament preparation and characterization

Feed stocks for filament production consisted of either neat polymer (PA) pellets or compounds made from the PA and chopped carbon fiber (20 wt.%). Filament of diameter 1.75 mm was prepared for each composition using a Brabender® Intelli-Torque Plasti-Corder® Torque Rheometer extruder equipped with a 0.75" (1.905 cm) 32 L/D general purpose single screw, a heated capillary die attachment, a 3/32" diameter nozzle with land of length 1.5", and downstream, custom-designed filament conveying apparatus. Other downstream equipment included a belt puller and a Dual Station Coiler, both manufactured by ESI-Extrusion Services. A Beta LaserMike® 5012 with DataPro 1000 data controller was used to monitor filament dimensions. The melt strand was cooled with air. The Brabender® zone set point temperatures were 240-280°C in the barrel zone and just above the melt temperature with the die at 245°C. The Brabender® speed ranged from 25 to 60 rpm and the puller speed from 20 to 70 feet per minute (6.093 to 21.336 meters per minute).

**3D printing**

Filaments described above were printed on an Argo 500 extrusion-based additive manufacturing system commercially available from Roboze Inc., (Houston, Texas, USA, or Bara, Italy). Nylon build sheets were employed as the printed object substrate. During the printing trials, the extruder temperature was set between 300 and 360°C, and the heated chamber was set at approximately the Tg of the material at 120-130°C. A 0.6 mm Roboze Argo Tip3-HSA tip was used for the model material, with a 0.1 to 0.3 mmlayer thickness. The material was extruded as a series of roads in a

layer-by-layer fashion to print structures in the heated chamber. ASTM Type I, IV, or V tensile bars were printed for each formulation, using 100% infill and either 45°/-45° alternating rasters or 0°/90° alternating rasters, and objects were promptly removed from the heated chamber and build sheet after printing.

We observed that the PA filament of the invention has a good printing ability.

The parts also exhibit a high tensile modulus. For instance, ASTM Type I tensile bars printed with a filament composed of PACM14 and 20 wt% chopped carbon fiber exhibit a tensile modulus of 5.0 GPa when tested according to ASTM D638 and at a speed of 0.2"/min.

## Claims

1. Filament having a cylindrical geometry or substantially cylindrical geometry and a diameter between 0.5 and 5.0 mm and comprising at least 50.0 wt%, based on the total weight of the filament, of at least one polyamide PA comprising repeat units $R_{PA}$ according to formula I :

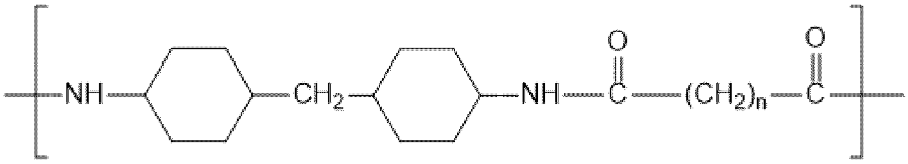

I,

wherein

• n is an integer between 12 and 20, and
• at least 30.0 mol.% of the 4,4'-diaminodicyclohexylmethane moiety is in a trans/trans configuration, based on the total number of moles of the 4,4'-diaminodicyclohexylmethane moiety in the PA.

2. Filament according to claim 1 wherein n is between 13 and 19 or between 14 and 16.

3. Filament according to claim 1 wherein n is 14, 15, 16 or 18.

4. Filament according to any one of preceding claims wherein the proportion of the 4,4'-diaminodicyclohexylmethane moiety in a trans/trans configuration is:

- at most 70.0 mol.%; or
- between 30.0 and 50.0 mol.%, this latter value being excluded.

5. The filament according to any one of the preceding claims wherein the proportion of repeat units $R_{PA}$ in the polyamide PA is:

- at least 10.0 mol. %; or
- at least 50.0 mol. %; or
- at least 60.0 mol.%; or
- at least 75.0 mol.%; or
- at least 80.0 mol.%; or
- at least 90.0 mol.%; or
- at least 95.0 mol.%; or
- at least 98.0 mol.%,

this proportion being based on the total number of repeat units in the polyamide PA.

6. The filament according to any one of the preceding claims wherein the repeat units of the polyamide PA consist of or consist essentially of the repeat units $R_{PA}$.

7. The filament of any one of the preceding claims, wherein the polyamide PA has a melting point Tm:

- of at most 240°C, when determined on the 2nd heat scan in differential scanning calorimeter DSC according to ISO11357, using heating and cooling rates of 20°C/min; and/or
- higher than 180°C, preferably at least 190°C, more preferably at least 200°C, even more preferably at least 220°C, when determined on the 2nd heat scan in differential scanning calorimeter DSC according to ISO11357, using heating and cooling rates of 20°C/min.

**8.** The filament of any one of the preceding claims, wherein the polyamide PA has a glass transition temperature Tg:

- of at least 90°C, preferably at least 100°C, even more preferably at least 110°C, when determined on the 2nd heat scan in differential scanning calorimeter DSC according to ISO11357, using heating and cooling rates of 20°C/min; and/or
- at most 170°C, when determined on the 2nd heat scan in differential scanning calorimeter DSC according to ISO11357, using heating and cooling rates of 20°C/min.

**9.** The filament of any one of the preceding claim wherein the polyamide PA has a water uptake at saturation, by immersion in water at 23°C of less than 4.0 wt.%, preferably less than 3.5 wt.%, preferably less than 3.0 wt. %, preferably less than 2.5 wt. %.

**10.** Filament according to any one of the preceding claims wherein the polyamide PA has a number average molecular weight $M_n$ ranging from 5,000 g/mol to 40,000 g/mol or from 7,000 g/mol to 35,000 g/mol or from 9,000 to 30,000 g/mol.

**11.** The filament according to any one of the preceding claims wherein the proportion of the polymeric component P of the filament is:

- at least 50.0 wt.%; or
- at least 60.0 wt.%; or
- at least 75.0 wt.%; or
- at least 80.0 wt%; or
- at least 85.0 wt%; or
- at least 90.0 wt%,

this proportion being based on the total weight of the filament.

**12.** Filament according to any one of the preceding claims, wherein the polymeric component P of the filament comprises at least 70.0 wt.% of the PA or the PAs, this proportion being based on the total weight of the polymeric component P in the filament.

**13.** The filament according to any one of the preceding claims wherein the filament does not comprise a polyamide other than the polyamide(s) PA.

**14.** The filament according to any one of the preceding claims wherein the filament comprises one or several additives A which are blended with the polyamide(s) PA and selected from the group consisting of fillers; colorants, dyes, pigments; flame retardants; and antioxidants.

**15.** An additive manufacturing AM method for making a three-dimensional 3D object, comprising extruding a filament according to any one of claims 1 to 14.

**16.** Use of the filament of any one of claims 1-14, for the manufacture of a three-dimensional 3D object using additive manufacturing, preferably FFF.

## Patentansprüche

**1.** Filament mit einer zylindrischen Geometrie oder im Wesentlichen zylindrischen Geometrie und einem Durchmesser zwischen 0,5 und 5,0 mm und umfassend wenigstens 50,0 Gew.-% (bezogen auf das Gesamtgewicht des Filaments) an wenigstens einem Polyamid (PA), das Wiederholungseinheiten ($R_{PA}$) gemäß Formel (I) umfasst:

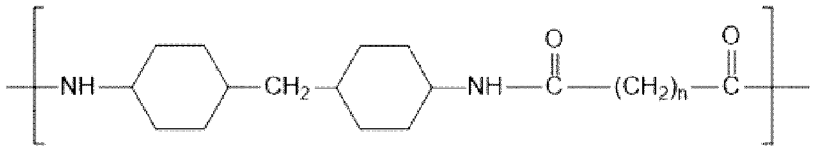

(I),

wobei

- n eine ganze Zahl zwischen 12 und 20 ist und
- wenigstens 30,0 mol-% der 4,4'-Diaminodicyclohexylmethaneinheit in einer trans/trans-Konfiguration vorliegen, bezogen auf die Gesamtmolzahl der 4,4'-Diaminodicyclohexylmethaneinheit in dem PA.

**2.** Filament nach Anspruch 1, wobei n zwischen 13 und 19 oder zwischen 14 und 16 beträgt.

**3.** Filament nach Anspruch 1, wobei n 14, 15, 16 oder 18 ist.

**4.** Filament nach einem der vorstehenden Ansprüche, wobei der Anteil der 4,4'-Diaminodicyclohexylmethaneinheit in einer trans/trans-Konfiguration beträgt:

- höchstens 70,0 mol-%; oder
- zwischen 30,0 und 50,0 mol-% (wobei der letztgenannte Wert ausgeschlossen ist).

**5.** Filament nach einem der vorstehenden Ansprüche, wobei der Anteil an Wiederholungseinheiten ($R_{PA}$) in dem Polyamid (PA) beträgt:

- wenigstens 10,0 mol-%; oder
- wenigstens 50,0 mol-%; oder
- wenigstens 60,0 mol-%; oder
- wenigstens 75,0 mol-%; oder
- wenigstens 80,0 mol-%; oder
- wenigstens 90,0 mol-%; oder
- wenigstens 95,0 mol-%; oder
- wenigstens 98,0 mol-%,

wobei dieser Anteil auf die Gesamtzahl von Wiederholungseinheiten in dem Polyamid (PA) bezogen ist.

**6.** Filament nach einem der vorstehenden Ansprüche, wobei die Wiederholungseinheiten des Polyamids (PA) aus den Wiederholungseinheiten ($R_{PA}$) bestehen oder im Wesentlichen daraus bestehen.

**7.** Filament nach einem der vorstehenden Ansprüche, wobei das Polyamid (PA) einen Schmelzpunkt (Tm) aufweist:

- von höchstens 240 °C, wenn bestimmt bei dem 2. Wärmedurchlauf in einem Differentialscanning-Kalorimeter (DSC) gemäß ISO11357 unter Verwendung von Heiz- und Kühlraten von 20 °C/min; und/oder
- höher als 180 °C, vorzugsweise wenigstens 190 °C, bevorzugter wenigstens 200 °C, noch bevorzugter wenigstens 220 °C, wenn bestimmt bei dem 2. Wärmedurchlauf in einem Differentialscanning-Kalorimeter (DSC) gemäß ISO11357 unter Verwendung von Heiz- und Kühlraten von 20 °C/min.

**8.** Filament nach einem der vorstehenden Ansprüche, wobei das Polyamid (PA) eine Glasübergangstemperatur (Tg) aufweist:

- von wenigstens 90 °C, vorzugsweise wenigstens 100 °C, noch bevorzugter wenigstens 110 °C, wenn bestimmt bei dem 2. Wärmedurchlauf in einem Differentialscanning-Kalorimeter (DSC) gemäß ISO11357 unter Verwendung von Heiz- und Kühlraten von 20 °C/min; und/oder
- höchstens 170 °C, wenn bestimmt bei dem 2. Wärmedurchlauf in einem Differentialscanning-Kalorimeter (DSC) gemäß ISO11357 unter Verwendung von Heiz- und Kühlraten von 20 °C/min.

**9.** Filament nach einem der vorstehenden Ansprüche, wobei das Polyamid (PA) eine Wasseraufnahme bei Sättigung

durch Eintauchen in Wasser bei 23 °C von weniger als 4,0 Gew.-%, vorzugsweise weniger als 3,5 Gew.-%, vorzugsweise weniger als 3,0 Gew.-%, vorzugsweise weniger als 2,5 Gew.-% aufweist.

**10.** Filament nach einem der vorstehenden Ansprüche, wobei das Polyamid (PA) ein anzahlgemitteltes Molekulargewicht $M_n$ in dem Bereich von 5.000 g/mol bis 40.000 g/mol oder von 7.000 g/mol bis 35.000 g/mol oder von 9.000 bis 30.000 g/mol aufweist.

**11.** Filament nach einem der vorstehenden Ansprüche, wobei der Anteil der Polymerkomponente (P) des Filaments beträgt:

- wenigstens 50,0 Gew.-%; oder
- wenigstens 60,0 Gew.-%; oder
- wenigstens 75,0 Gew.-%; oder
- wenigstens 80,0 Gew.-%; oder
- wenigstens 85,0 Gew.-%; oder
- wenigstens 90,0 Gew.-%,

wobei dieser Anteil auf das Gesamtgewicht des Filaments bezogen ist.

**12.** Filament nach einem der vorstehenden Ansprüche, wobei die Polymerkomponente (P) des Filaments wenigstens 70,0 Gew.-% an dem PA oder den PAs umfasst, wobei dieser Anteil auf das Gesamtgewicht der Polymerkomponente (P) im Filament bezogen ist.

**13.** Filament nach einem der vorstehenden Ansprüche, wobei das Filament kein anderes Polyamid als das oder die Polyamid(e) (PA) umfasst.

**14.** Filament nach einem der vorstehenden Ansprüche, wobei das Filament ein oder mehrere Additive (A) umfasst, die mit dem oder den Polyamid(en) (PA) gemischt sind und ausgewählt sind aus der Gruppe bestehend aus Füllstoffen; Farbmitteln, Farbstoffen, Pigmenten; Flammhemmern; und Antioxidationsmitteln.

**15.** Verfahren zur additiven Fertigung (AM) zur Herstellung eines dreidimensionalen (3D) Gegenstands, umfassend Extrudieren eines Filaments nach einem der Ansprüche 1 bis 14.

**16.** Verwendung des Filaments nach einem der Ansprüche 1-14 zur Herstellung eines dreidimensionalen (3D) Gegenstands durch additive Fertigung, vorzugsweise FFF.

## Revendications

**1.** Filament ayant une géométrie cylindrique ou une géométrie sensiblement cylindrique et un diamètre compris entre 0,5 et 5,0 mm et comprenant au moins 50,0 % en poids (par rapport au poids total du filament) d'au moins un polyamide (PA) comprenant des motifs répétitifs ($R_{PA}$) selon la formule (I) :

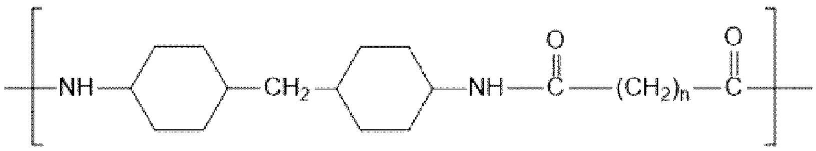

(I)

dans laquelle

• n est un entier compris entre 12 et 20, et
• au moins 30,0 % en moles du groupement 4,4'-diaminodicyclohexylméthane est dans une configuration trans/trans, par rapport au nombre total de moles du groupement 4,4'-diaminodicyclohexylméthane dans le PA.

**2.** Filament selon la revendication 1, dans lequel n est compris entre 13 et 19 ou entre 14 et 16.

**3.** Filament selon la revendication 1, dans lequel n est 14, 15, 16 ou 18.

**4.** Filament selon l'une quelconque des revendications précédentes, dans lequel la proportion du groupement 4,4'-diaminodicyclohexylméthane dans une configuration trans/trans est :

- d'au plus 70,0 % en moles ; ou
- comprise entre 30,0 et 50,0 % en moles (cette dernière valeur étant exclue).

**5.** Filament selon l'une quelconque des revendications précédentes, dans lequel la proportion de motifs répétitifs ($R_{PA}$) dans le polyamide (PA) est :

- d'au moins 10,0 % en moles ; ou
- d'au moins 50,0 % en moles ; ou
- d'au moins 60,0 % en moles ; ou
- d'au moins 75,0 % en moles ; ou
- d'au moins 80,0 % en moles ; ou
- d'au moins 90,0 % en moles ; ou
- d'au moins 95,0 % en moles ; ou
- d'au moins 98,0 % en moles,

cette proportion étant basée sur le nombre total de motifs répétitifs dans le polyamide (PA).

**6.** Filament selon l'une quelconque des revendications précédentes, dans lequel les motifs répétitifs du polyamide (PA) sont constitués ou sont essentiellement constitués des motifs répétitifs ($R_{PA}$).

**7.** Filament selon l'une quelconque des revendications précédentes, dans lequel le polyamide (PA) a un point de fusion (Tm) :

- d'au plus 240 °C, lorsqu'il est déterminé sur le 2$^{ème}$ balayage thermique dans un calorimètre différentiel à balayage (DSC) selon la norme ISO 11357, en utilisant des vitesses de chauffage et de refroidissement de 20 °C/min ; et/ou
- supérieur à 180 °C, de préférence au moins 190 °C, plus préférablement au moins 200 °C, encore plus préférablement au moins 220 °C, lorsqu'il est déterminé sur le 2$^{ème}$ balayage thermique dans un calorimètre différentiel à balayage (DSC) selon la norme ISO 11357, en utilisant des vitesses de chauffage et de refroidissement de 20 °C/min.

**8.** Filament selon l'une quelconque des revendications précédentes, dans lequel le polyamide (PA) a une température de transition vitreuse (Tg) :

- d'au moins 90 °C, de préférence d'au moins 100 °C, encore plus préférablement d'au moins 110 °C, lorsqu'elle est déterminée sur le 2$^{ème}$ balayage thermique dans un calorimètre différentiel à balayage (DSC) selon la norme ISO 11357, en utilisant des vitesses de chauffage et de refroidissement de 20 °C/min ; et/ou
- d'au plus 170 °C, lorsqu'elle est déterminée sur le 2$^{ème}$ balayage thermique dans le calorimètre différentiel à balayage (DSC) selon la norme ISO 11357, en utilisant des vitesses de chauffage et de refroidissement de 20 °C/min.

**9.** Filament selon l'une quelconque des revendications précédentes, dans lequel le polyamide (PA) a une absorption d'eau à saturation, par immersion dans l'eau à 23 °C, inférieure à 4,0 % en poids, de préférence inférieure à 3,5 % en poids, de préférence inférieure à 3,0 % en poids, de préférence inférieure à 2,5 % en poids.

**10.** Filament selon l'une quelconque des revendications précédentes, dans lequel le polyamide (PA) a un poids moléculaire moyen en nombre $M_n$ allant de 5 000 g/mole à 40 000 g/mole ou de 7 000 g/mole à 35 000 g/mole ou de 9 000 à 30 000 g/mole.

**11.** Filament selon l'une quelconque des revendications précédentes, dans lequel la proportion du composant polymérique(P) du filament est :

- d'au moins 50,0 % en poids ; ou

- d’au moins 60,0 % en poids ; ou
- d’au moins 75,0 % en poids ; ou
- d’au moins 80,0 % en poids ; ou
- d’au moins 85,0 % en poids ; ou
- d’au moins 90,0 % en poids,

cette proportion étant basée sur le poids total du filament.

**12.** Filament selon l’une quelconque des revendications précédentes, dans lequel le composant polymérique (P) du filament comprend au moins 70,0 % en poids du PA ou des PA, cette proportion étant basée sur le poids total du composant polymérique (P) dans le filament.

**13.** Filament selon l’une quelconque des revendications précédentes, dans lequel le filament ne comprend pas de polyamide autre que le ou les polyamide(s) (PA).

**14.** Filament selon l’une quelconque des revendications précédentes, dans lequel le filament comprend un ou plusieurs additifs (A) qui sont mélangés avec le ou les polyamide(s) (PA) et choisi(s) dans le groupe constitué par les charges ; les matières colorantes, les colorants, les pigments ; les agents ignifugeants ; et les antioxydants.

**15.** Procédé de fabrication additive (AM) pour fabriquer un objet tridimensionnel (3D), comprenant l’extrusion d’un filament selon l’une quelconque des revendications 1 à 14.

**16.** Utilisation du filament selon l’une quelconque des revendications 1 à 14, pour la fabrication d’un objet tridimensionnel (3D) en utilisant une fabrication additive, de préférence le FFF.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 21305610
- US 5360891 A
- US 20150099847 A
- US 8399557 B
- WO 2019170463 A
- GB 1150860 A
- US 3591565 A
- US 3691749 A
- US 3393210 A, Dupont


### Non-patent literature cited in the description


- **PRINCE et al.** *Macromolecules*, 1971, vol. 4 (3), 347-350